# EUROPEAN PATENT APPLICATION

(11) **EP 3 916 903 A1**
(43) Date of publication of application: **01.12.2021**
(21) Application number: 20919363.0
(22) Date of filing: 11.03.2020
(51) Int. Cl.: H01M 50/531

(54) **BATTERY CELL STRUCTURE AND BATTERY**

(71) Applicant: Dongguan NVT Technology Limited, Donguan, Guangdong 523000 (CN)
(72) Inventor: YANG, Shujun, Dongguan, Guandong 523000 (CN)
(74) Representative: Klunker IP Patentanwälte PartG mbB
(86) International application number: PCT/CN2020/078848
(87) International publication number: WO 2021/179216

(57) **Abstract**

This application discloses a cell structure and a battery using the same. The cell structure includes a cell body and a first positive tab and a first negative tab that are electrically connected to the cell body, and the first positive tab and the first negative tab are located on different sides of the cell body. The cell structure further includes a second positive tab or a second negative tab that are electrically connected to the cell body, the first positive tab and the second negative tab are arranged on the same side of the cell body to supply power to a battery protection board, or the first negative tab and the second positive tab are arranged on the same side of the cell body to supply power to the battery protection board. In the cell structure according to this application, there is tab output on both sides of the cell body, which can meet the demand for excessive current. In addition, the tabs on both sides of the cell body can make a charging and discharging loop of the cell structure smoother. In addition, the tabs with excessive current are located on different sides of the cell structure, decentralizing heat sources and reducing temperature rise caused by generated heat.

## Description

### TECHNICAL FIELD

This application relates to the field of electrochemical apparatus technologies, and specifically, to a cell structure and a battery.

### BACKGROUND

Lithium-ion batteries have been widely used in various digital products, power tools, drones, energy storage systems, and vehicle power systems because of their advantages such as high energy density, long cycle life, and high cost performance.

Users' constant pursuit of product performance puts forward new requirements for fast charging and higher power output of lithium batteries, which in turn poses a great challenge to high efficiency, stability, and reliability of a lithium battery management circuit. When the lithium battery management circuit needs to carry more power, battery cells and components may generate more heat, which causes poor circuit thermal stability, battery overheating, performance degradation, poor circuit reliability or even damage, and even lead to lithium battery safety problems. Existing lithium batteries are mostly protected by a protection board. The protection board is placed at one end of the lithium battery, and two connectors may be used to meet the demand for excessive current. However, width of a cell tab and space for a protection device require a wider protection board, which in turn decreases capacity of the battery. In addition, concentration of heat generating devices may lead to uneven heat distribution and abnormal temperature rise of the battery, thereby reducing user experience.

### SUMMARY

This application is intended to resolve at least one of the technical problems in the prior art. Therefore, one aspect of this application provides a cell structure, where the cell structure can meet the demand for excessive current and distribute heat sources, thereby reducing temperature rise caused by generated heat.

According to the embodiments of this application, the cell structure includes a cell body and a first positive tab and a first negative tab that are electrically connected to the cell body, and the first positive tab and the first negative tab are located on different sides of the cell body. The cell structure further includes a second positive tab or a second negative tab electrically connected to the cell body, the first positive tab and the second negative tab are arranged on the same side of the cell body to supply power to a battery protection board, or the first negative tab and the second positive tab are arranged on the same side of the cell body to supply power to the battery protection board.

In the cell structure according to the embodiments of this application, there is tab output on both sides of the cell body, which can meet the demand for excessive current, making a charging and discharging loop of the cell structure smoother through the tabs on both sides of the cell body. In addition, the tabs with excessive current are located on different sides of the cell structure, decentralizing heat sources and reducing temperature rise caused by generated heat.

In some embodiments, a width of the second positive tab is less than a width of the first positive tab and a width of the first negative tab.

In some embodiments, a width of the second negative tab is less than a width of the first positive tab and a width of the first negative tab.

In some embodiments, the first positive tab and the first negative tab are located on two opposite sides of the cell body, the first positive tab and the first negative tab are symmetrical with respect to the center of the cell body, or the first positive tab and the first negative tab are not symmetrical with respect to the center of the cell body.

In some embodiments, a direction of the first positive tab extending from the cell body is opposite a direction of the first negative tab extending from the cell body.

In some embodiments, when the cell structure includes the second positive tab, a direction of the first positive tab extending from the cell body is opposite a direction of the second positive tab extending from the cell body; and when the cell structure includes the second negative tab, a direction of the first negative tab extending from the battery cell is opposite a direction of the second negative tab extending from the cell body.

In some embodiments, the cell structure further includes a positive electrode connecting piece electrically connected to the first positive tab and a negative electrode connecting piece electrically connected to the first negative tab.

Another aspect of this application provides a battery, including a cell structure. The cell structure includes a cell body and a first positive tab and a first negative tab that are electrically connected to the cell body. The cell structure further includes a second positive tab or a second negative tab electrically connected to the cell body, and the first positive tab and the first negative tab are located on different sides of the cell body, where the first positive tab and the second negative tab are arranged on the same side of the cell body to supply power to a battery protection board; or the first negative tab and the second positive tab are arranged on the same side of the cell body to supply power to the battery protection board.

In some embodiments, a positive electrode terminal of the battery is electrically connected to a positive power feed terminal of an electronic device through an FPC, and a negative electrode terminal of the battery is electrically connected to a negative power feed terminal of the electronic device through the battery protection board.

In some embodiments, a negative electrode terminal of the battery is electrically connected to a negative power feed terminal of an electronic device through an FPC, and a positive electrode terminal of the battery is electrically connected to a positive power feed terminal of the electronic device through the battery protection board.

In some embodiments, the cell structure is provided with an edge connector connection area to connect to a power spring of the electronic device, and the edge connector connection area is electrically connected to the first positive tab and the first negative tab.

In the battery according to the embodiments of this application, there is tab output on both sides of the cell body, which can meet the demand for excessive current, making a charging and discharging loop of the cell structure smoother through the tabs on both sides of the cell body. In addition, the tabs with excessive current are located on different sides of the cell structure, decentralizing heat sources and reducing temperature rise caused by generated heat.

### BRIEF DESCRIPTION OF DRAWINGS

The above and/or additional aspects and advantages of this application will become obviously easy to understand from the description of the embodiments with reference to the following drawings.
FIG. 1 is a schematic structural diagram of a cell structure according to an embodiment of this application;
FIG. 2 is a schematic structural diagram of a cell structure according to another embodiment of this application;
FIG. 3 is an application scenario diagram of a battery supplying power to an electronic device according to an embodiment of this application;
FIG. 4 is an application scenario diagram of a battery supplying power to an electronic device according to another embodiment of this application;
FIG. 5 is a schematic diagram of a battery structure formed by bending a battery protection board on a head in a cell structure according to an embodiment of this application;
FIG. 6 is a schematic structural diagram of a cell structure as a hard package according to an embodiment of this application from a first perspective;
FIG. 7 is a schematic structural diagram of a cell structure as a hard package according to an embodiment of this application from a second perspective;
FIG. 8 is a schematic structural diagram of a cell structure as a hard package according to another embodiment of this application from a first perspective; and
FIG. 9 is a schematic structural diagram of a cell structure as a hard package according to another embodiment of this application from a second perspective.

Reference signs are described as follows:
cell structure 100, cell body 110,
first positive tab 120, first negative tab 130, second positive tab 140, second negative tab 170,
battery protection board 101, positive electrode connecting piece 150, negative electrode connecting piece 160, flexible printed board 180,
battery 200, electronic device 300, positive power feed terminal 301, and negative power feed terminal 302.

### DESCRIPTION OF EMBODIMENTS

The embodiments of this application are described in detail below. Examples of the embodiments are shown in the accompanying drawings, and the same or similar reference signs indicate the same or similar components or components with the same or similar functions. The embodiments described below with reference to the drawings are examples and only used to explain this application, but cannot be understood as a limitation of this application.

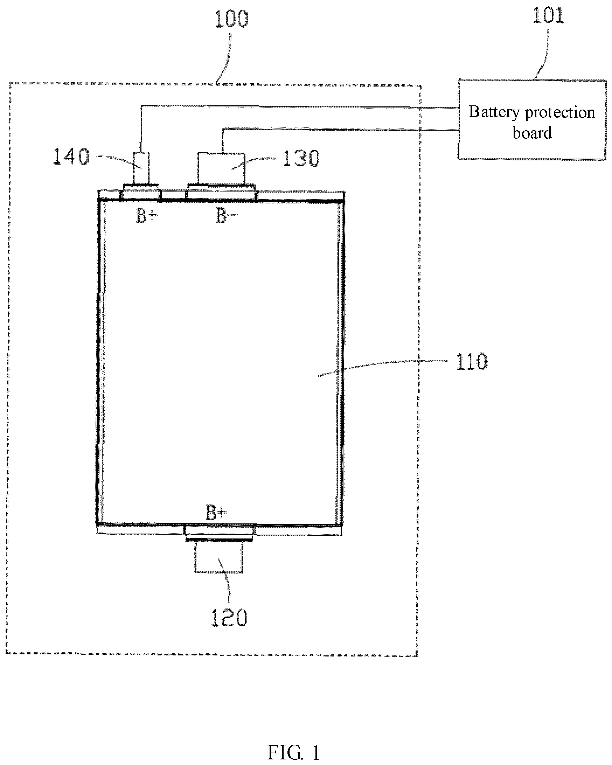

The following describes in detail a cell structure 100 according to an embodiment of this application with reference to FIG. 1 to FIG. 2.

As shown in FIG. 1, the cell structure 100 according to this embodiment of this application includes a cell body 110, a first positive tab 120, a first negative tab 130, and a second positive tab 140. The first positive tab 120, the first negative tab 130, and the second positive tab 140 are electrically connected to the cell body 110. The first positive tab 120 and the first negative tab 130 are located on different sides of the cell body 110. The first negative tab 130 and the second positive tab 140 are arranged on the same side of the cell body 110 to supply power to a battery protection board 101. The battery protection board 101 is an integrated circuit board for protecting rechargeable lithium batteries. A circuit architecture of the battery protection board 101 belongs to the prior art, and details will not be repeated herein. In the cell structure 100 provided in this application, there is tab output on both sides of the cell body 110, and the demand for excessive current can be met through the first positive tab 120 and the first negative tab 130, making a smooth charging and discharging loop of the cell structure 100. In addition, the first negative tab 130 and the second positive tab 140 are used to supply power to the battery protection board 101 to protect a battery. The first positive tab 120 and the first negative tab 130 are arranged on different sides of the cell body 110, decentralizing heat sources and reducing temperature rise cause by generated heat. In addition, the battery protection board 101 does not need to be connected to the first positive tab 120, reducing design complexity and development cost of the battery protection board 101.

In some embodiments, the first positive tab 120 and the first negative tab 130 are arranged on two sides of the cell body 110, so that the first positive tab 120 and the first negative tab 130 can be designed wider to allow excessive current and reduce generated heat. Widths of the first positive tab 120 and the first negative tab 130 can be set based on the actual demand for excessive current. The width of the first positive tab 120 may be equal to or not equal to the width of the first negative tab 130. For example, in a cell structure of a battery used in existing mobile devices, widths of the positive and negative tabs arranged on the same side can generally be up to 8 millimeters. In this application, the first positive tab 120 and the first negative tab 130 are arranged on different sides of the cell body 110, so that the widths of the first positive tab 120 and the first negative tab 130 can be designed to be 10 millimeters or even larger.

In some embodiments, the second positive tab 140 is used to supply power to the battery protection board 101, so no excessive current is required. Therefore, the width of the second positive tab 140 can be designed to be smaller, and preferably, the width of the second positive tab 140 is smaller than the width of the first positive tab 120 and the width of the first negative tab 130. For example, the widths of the first positive tab 120 and the first negative tab 130 are 10 millimeters, and the width of the second positive tab 140 is 5 millimeters.

In some embodiments, the first positive tab 120 and the first negative tab 130 are located on two opposite sides of the cell body 110, and the first positive tab 120 and the first negative tab 130 are symmetrical with respect to the center of the cell body 110.

In some embodiments, the first positive tab 120 and the first negative tab 130 are located on two opposite sides of the cell body 110, and the first positive tab 120 and the first negative tab 130 are not symmetrical with respect to the center of the cell body 110.

In some embodiments, a direction of the first positive tab 120 extending from the cell body 110 is opposite a direction of the first negative tab 130 extending from the cell body 110.

In some embodiments, the direction of the first positive tab 120 extending from the cell body 110 is opposite a direction of the second positive tab 140 extending from the cell body 110. The direction of the second positive tab 140 extending from the cell body 110 is the same as the direction of the first negative tab 130 extending from the cell body 110.

In some embodiments, the first positive tab 120 and the first negative tab 130 each may further be located on two adjacent sides of the cell body 110 (not shown in the figure).

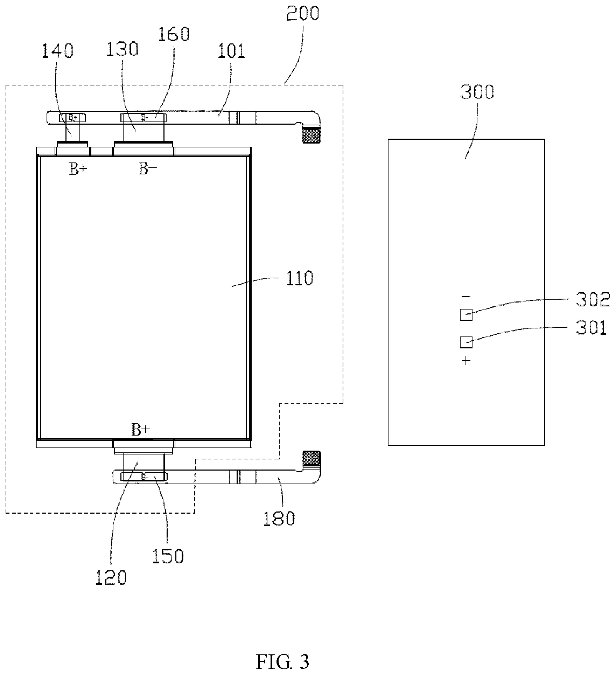

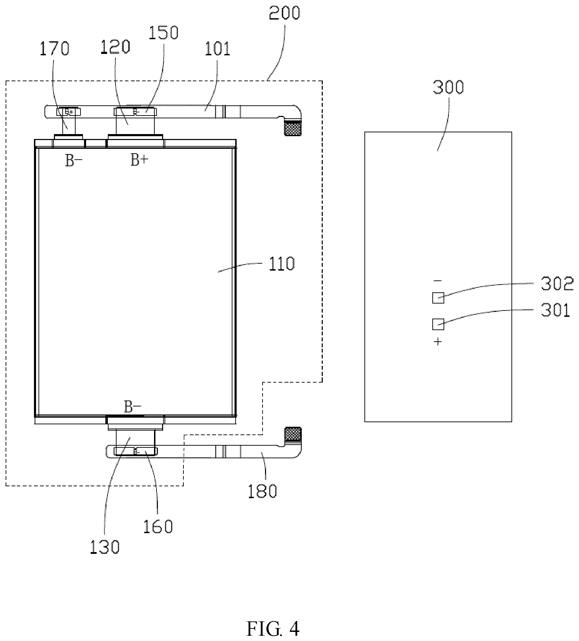

In some embodiments, the cell structure 100 further includes a positive electrode connecting piece 150 (as shown in FIG. 3 or FIG. 4) and a negative electrode connecting piece 160 (as shown in FIG. 3 or FIG. 4). The first positive tab 120 is electrically connected to the positive electrode connecting piece 150, and the first negative tab 130 is electrically connected to the negative electrode connecting piece 160. The positive and negative electrode voltages of the cell structure 100 are output through the positive electrode connecting piece 150 and the negative electrode connecting piece 160, respectively.

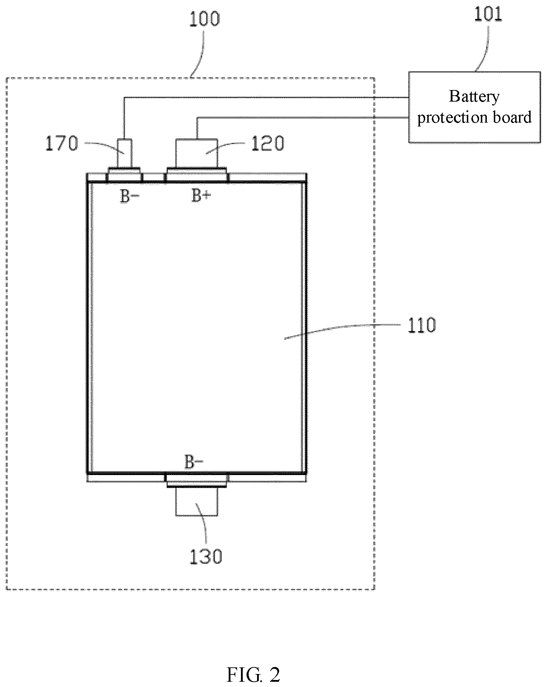

As shown in FIG. 2, a cell structure 100 according to an embodiment of this application includes a cell body 110, a first positive tab 120, a first negative tab 130, and a second negative tab 170. The first positive tab 120, the first negative tab 130, and the second negative tab 170 are electrically connected to the cell body 110. The first positive tab 120 and the first negative tab 130 are located on different sides of the cell body 110. The first positive tab 120 and the second negative tab 170 are arranged on the same side of the cell body 110 to supply power to a battery protection board 101. The battery protection board 101 is an integrated circuit board for protecting rechargeable lithium batteries. A circuit architecture of the battery protection board 101 belongs to the prior art, and details will not be repeated herein. In the cell structure 100 provided in this application, there is tab output on both sides of the cell body 110, and the demand for excessive current can be met through the first positive tab 120 and the first negative tab 130, making a smooth charging and discharging loop of the cell structure 100. In addition, the first positive tab 120 and the second negative tab 170 are used to supply power to the battery protection board 101 to protect a battery. The first positive tab 120 and the first negative tab 130 are arranged on different sides of the cell body 110, decentralizing heat sources and reducing temperature rise caused by generated heat. In addition, the battery protection board 101 does not need to be connected to the first negative tab 130, reducing design complexity and development cost of the battery protection board 101.

In some embodiments, the first positive tab 120 and the first negative tab 130 are arranged on two sides of the cell body 110, so that the first positive tab 120 and the first negative tab 130 can be designed wider to allow excessive current and reduce generated heat. Widths of the first positive tab 120 and the first negative tab 130 can be set based on the actual demand for excessive current. The width of the first positive tab 120 may be equal to or not equal to the width of the first negative tab 130. For example, in a cell structure of a battery used in existing mobile devices, widths of the positive and negative tabs arranged on the same side can generally be up to 8 millimeters. In this application, the first positive tab 120 and the first negative tab 130 are arranged on different sides of the cell body 110, so that the widths of the first positive tab 120 and the first negative tab 130 can be designed to be 10 millimeters or even larger.

In some embodiments, because the second negative tab 170 is used to supply power to the battery protection board 101 and no excessive current is required, the width of the second negative tab 170 can be designed to be smaller, and preferably, the width of the second negative tab 170 is smaller than the width of the first positive tab 120 and the width of the first negative tab 130. For example, the widths of the first positive tab 120 and the first negative tab 130 are 10 millimeters, and the width of the second negative tab 170 is 5 millimeters.

In some embodiments, the first positive tab 120 and the first negative tab 130 are located on two opposite sides of the cell body 110, and the first positive tab 120 and the first negative tab 130 are symmetrical with respect to the center of the cell body 110.

In some embodiments, a direction of the first positive tab 120 extending from the cell body 110 is opposite a direction of the first negative tab 130 extending from the cell body 110.

In some embodiments, the direction of the first negative tab 130 extending from the cell body 110 is opposite a direction of the second negative tab 170 extending from the cell body 110. The direction of the second negative tab 170 extending from the cell body 110 is the same as the direction of the first positive tab 120 extending from the cell body 110.

In some embodiments, the first positive tab 120 and the first negative tab 130 may alternatively be located on two adjacent sides of the cell body 110.

In some embodiments, the cell structure 100 further includes a positive electrode connecting piece 150 (as shown in FIG. 3 or FIG. 4) and a negative electrode connecting piece 160 (as shown in FIG. 3 or FIG. 4). The first positive tab 120 is electrically connected to the positive electrode connecting piece 150, and the first negative tab 130 is electrically connected to the negative electrode connecting piece 160. The positive and negative electrode voltages of the cell structure 100 are output through the positive electrode connecting piece 150 and the negative electrode connecting piece 160, respectively.

In addition, this application further discloses a battery 200, including the cell structure 100 according to any one of the foregoing embodiments.

As shown in FIG. 3, the battery 200 is used to supply power to an electronic device 300, and the electronic device 300 may be an electronic device such as a mobile phone or a tablet computer. The electronic device 300 includes a positive power feed terminal 301 and a negative power feed terminal 302. The battery 200 includes a cell structure 100 and a battery protection board 101, and the cell structure 100 includes a cell body 110, a first positive tab 120, a first negative tab 130, and a second positive tab 140. A positive electrode connecting piece 150 of the battery 200 is electrically connected to the positive power feed terminal 301 of the electronic device 300 through a flexible printed board (Flexible Printed Circuit, FPC) 180, and a negative electrode connecting piece 160 of the battery 200 is electrically connected to the negative power feed terminal 302 of the electronic device 300 through the battery protection board 101, to supply power to the electronic device 300.

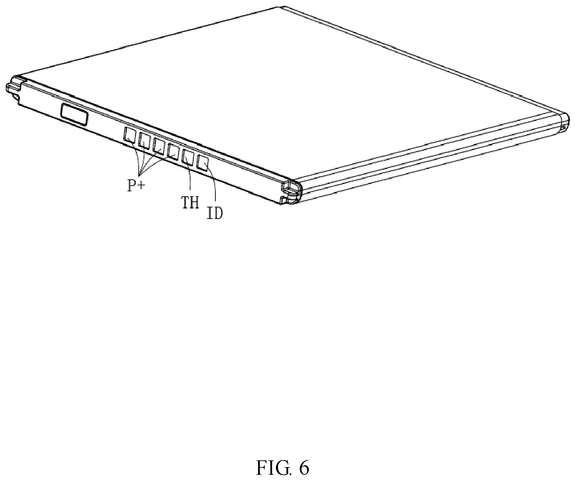

In some embodiments, the battery 200 may further be provided with an edge connector connection area, as shown in FIG. 6 to FIG. 9. The edge connector connection area is electrically connected to the first positive tab 120 and the first negative tab 130, the electronic device 300 is correspondingly provided with a power spring (not shown in the figure), and an edge connector connection area of the battery 200 can be in contact with the power spring of the electronic device 300, to supply power to the electronic device 300.

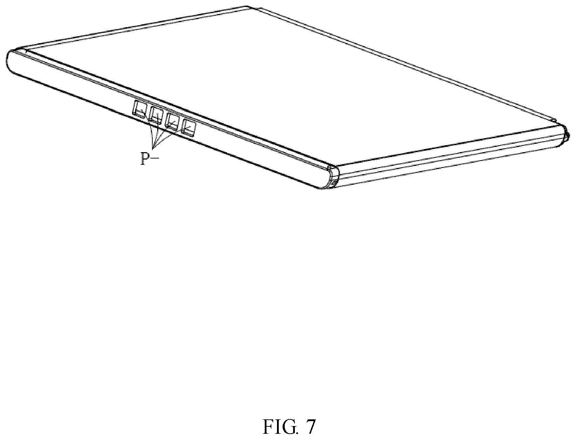

For example, the first positive tab 120 and the first negative tab 130 are located on an upper side and a lower side of the cell body 110, respectively. As shown in FIG. 6, a positive edge connector connection area (electrically connected to the first positive tab 120) is provided on an upper side of the battery 200, where the positive edge connector connection area includes a plurality of positive electrode edge connectors P+ and can be used to supply power to the positive power feed terminal 301 of the electronic device 300. As shown in FIG. 7, a negative edge connector connection area (electrically connected to the first negative tab 130) is provided on a lower side of the battery 200, where the negative edge connector connection area includes a plurality of negative electrode edge connectors P- and can be used to supply power to the negative power feed terminal 302 of the electronic device 300. The electronic device 300 is provided with power springs corresponding to the positive edge connector connection area and the negative edge connector connection area. The positive edge connector connection area may further be provided with a thermal edge connector TH for detecting a temperature of the battery 200 and an identity edge connector ID that presents a manufacturer of the battery 200.

The structure in FIG. 4 is basically the same as that in FIG. 3, except that the cell structure 100 of the battery 200 in FIG. 4 includes a cell body 110, a first positive tab 120, a first negative tab 130, and a second negative tab 170. The negative connecting piece 160 of the battery 200 is electrically connected to the negative power feed terminal 302 of the electronic device 300 through the FPC 180, and the positive connecting piece 150 of the battery 200 is electrically connected to the positive power feed terminal 301 of the electronic device 300 through the battery protection board 101, to supply power to the electronic device 300.

In some embodiments, the battery 200 may also be provided with an edge connector connection area, the edge connector connection area is electrically connected to the first positive tab 120 and the first negative tab 130, and the electronic device 300 is correspondingly provided with a power spring, so as to supply power to the electronic device 300 through contact connection between the edge connector connection area and the power spring.

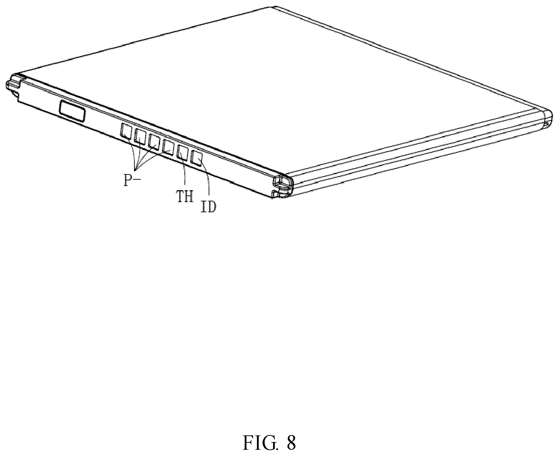

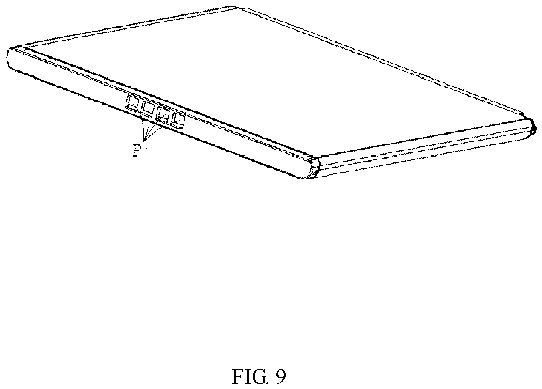

For example, the first positive tab 120 and the first negative tab 130 are located on a lower side and an upper side of the cell body 110 respectively. As shown in FIG. 8, the battery 200 is provided with the negative edge connector connection area on an upper side, where the negative edge connector connection area includes a plurality of negative electrode edge connectors P- and can be used to supply power to the negative power feed terminal 302 of the electronic device 300. As shown in FIG. 9, the battery 200 is provided with a positive edge connector connection area on a lower side, where the positive edge connector connection area includes a plurality of positive electrode edge connectors P+ and can be used to supply power to the positive power feed terminal 301 of the electronic device 300, and the electronic device 300 is provided with power springs corresponding to the positive edge connector connection area and the negative edge connector connection area. The negative edge connector connection area may further be provided with a thermal edge connector TH for detecting a temperature of the battery 200 and an identity edge connector ID that characterizes identification of the manufacturer of the battery 200.

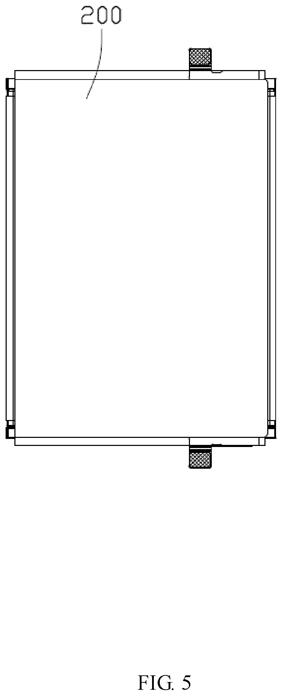

In some embodiments, the battery structure shown in FIG. 3 or FIG. 4 can form a state shown in FIG. 5 when the battery protection board 101 is bent on the head of the battery 200.

The cell structure 100 according to this embodiment of this application will be described in detail below with reference to some specific embodiments. It should be understood that the following description is only an example rather than a specific limitation to this application.

### Embodiment 1

In this embodiment, the cell structure 100 includes a cell body 110, a first positive tab 120, a first negative tab 130, and a second positive tab 140. The first positive tab 120, the first negative tab 130, and the second positive tab 140 are electrically connected to the cell body 110. The first positive tab 120 and the first negative tab 130 are located on two opposite sides of the cell body 110, and a high current can be output through the first positive tab 120 and the first negative tab 130. The first negative tab 130 and the second positive tab 140 are arranged on the same side of the cell body 110, and power is supplied to the battery protection board 101 through the first negative tab 130 and the second positive tab 140.

### Embodiment 2

In this embodiment, the cell structure 100 includes a cell body 110, a first positive tab 120, a first negative tab 130, and a second negative tab 170. The first positive tab 120, the first negative tab 130, and the second negative tab 170 are electrically connected to the cell body 110. The first positive tab 120 and the first negative tab 130 are located on two opposite sides of the cell body 110, and a high current can be output through the first positive tab 120 and the first negative tab 130. The first positive tab 120 and the second negative tab 170 are arranged on the same side of the cell body 110, and power is supplied to the battery protection board 101 through the first positive tab 120 and the second negative tab 170.

In the descriptions of this application, it should be understood that the orientations or positional relationships indicated by the terms "center", "vertical", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships shown in the accompanying drawings, are merely intended to facilitate the descriptions of this application and simplify the descriptions, are not intended to indicate or imply that the apparatuses or components mentioned in this application must have specific orientations, or be constructed and operated for a specific orientation, and therefore shall not be construed as a limitation to this application. In the descriptions of this application, "a plurality of" means at least two.

In the description of this specification, the description referring to the terms "an embodiment", "some embodiments", "exemplary embodiments", "an example", "a specific example", or "some examples" means a specific feature, structure, material or characteristic described with reference to the embodiment or example is included in at least one embodiment or example of this application. In this specification, illustrative expressions of these terms do not necessarily refer to the same embodiment or example. Moreover, the specific feature, structure, material, or characteristic described may be combined in any suitable manner in any one or more embodiments or examples.

Although the embodiments of this application have been shown and described, those of ordinary skill in the art can understand that various changes, modifications, substitutions, and variants of these embodiments may be made without departing from the principles and purposes of this application, and the scope of this application is limited by the claims and their equivalents.

## Claims

1. A cell structure, comprising a cell body, a first positive tab and a first negative tab that are electrically connected to the cell body, **characterized in that**
the first positive tab and the first negative tab are located on different sides of the cell body; and
the cell structure further comprises a second positive tab or a second negative tab that is electrically connected to the cell body, wherein the first positive tab and the second negative tab are arranged on the same side of the cell body to supply power to a battery protection board; or the first negative tab and the second positive tab are arranged on the same side of the cell body to supply power to the battery protection board.

2. The cell structure according to claim 1, **characterized in that** a width of the second positive tab is less than a width of the first positive tab and a width of the first negative tab.

3. The cell structure according to claim 1, **characterized in that** a width of the second negative tab is less than a width of the first positive tab and a width of the first negative tab.

4. The cell structure according to claim 1, **characterized in that** the first positive tab and the first negative tab are located on two opposite sides of the cell body, the first positive tab and the first negative tab are symmetrical with respect to the center of the cell body, or the first positive tab and the first negative tab are not symmetrical with respect to the center of the cell body.

5. The cell structure according to claim 1, **characterized in that** a direction of the first positive tab extending from the cell body is opposite a direction of the first negative tab extending from the cell body.

6. The cell structure according to claim 1, **characterized in that** when the cell structure comprises the second positive tab, a direction of the first positive tab extending from the cell body is opposite a direction of the second positive tab extending from the cell body; and when the cell structure comprises the second negative tab, a direction of the first negative tab extending from the cell body is opposite a direction of the second negative tab extending from the cell body.

7. The cell structure according to claim 1, **characterized in that** the cell structure further comprises a positive electrode connecting piece electrically connected to the first positive tab and a negative electrode connecting piece electrically connected to the first negative tab.

8. A battery, **characterized in that** the battery further comprises the cell structure according to any one of claims 1 to 7.

9. The battery according to claim 8, **characterized in that** a positive electrode terminal of the battery is electrically connected to a positive power feed terminal of an electronic device through an FPC, and a negative electrode terminal of the battery is electrically connected to a negative power feed terminal of the electronic device through a battery protection board.

10. The battery according to claim 8, **characterized in that** a negative electrode terminal of the battery is electrically connected to a negative power feed terminal of the electronic device through an FPC, and a positive electrode terminal of the battery is electrically connected to a positive power feed terminal of the electronic device through a battery protection board.

11. The battery according to claim 8, **characterized in that** the battery is provided with an edge connector connection area to connect to a power spring of an electronic device, and the edge connector connection area is electrically connected to the first positive tab and the first negative tab.
